# EUROPÄISCHE PATENTANMELDUNG

(11) **EP 0 987 908 A2**
(43) Veröffentlichungstag der Anmeldung: **22.03.2000**
(21) Anmeldenummer: 99440246.9
(22) Anmeldetag: 10.09.1999
(51) Int. Cl.: H04Q 3/00, H04Q 11/04

(54) **ISDN/IN-Interaktion für Bearer-unrelated-Anwendungen**

(30) Priorität: 14.09.1998 DE 19841926
(71) Anmelder: ALCATEL, 75008 Paris (FR)
(72) Erfinder: Münch, Rainer, 71706 Markgröningen (DE); Webel, Thilo, 75175 Pforzheim (DE)
(74) Vertreter: Zinsinger, Norbert

(57) **Zusammenfassung**

Ein Verfahren zum Bereitstellen einer ISDN/IN-Interaktion-Funktion für nicht auf einen Nutzkanal bezogene Dienste (bearer-unrelated services) in einer Kommunikationsnetzwerkumgebung, ist gekennzeichnet durch folgende Merkmale:
- Nachrichten von nicht auf einen Nutzkanal bezogenen Diensten werden zu einem Dienstvermittlungapunkt (Service Switching Point, SSP) durchgeleitet;
- der SSP analysiert diese empfangenen Nachrichten,
- der SSP bestimmt durch diese Analyse, ob ein Dienststeuerpunkt (Service Control Point, SCP) zum Erbringen von Funktionen für diese Nachrichten, die nicht-Nutzkanal-bezogenen Diensten zugeordnet sind, angesprochen werden muß, und welche Information zum SCP gesendet wird.

## Beschreibung

Die Erfindung betrifft ein Verfahren nach dem Oberbegriff des Anspruchs 1.

Bearer-unrelated-Anwendungen sind nicht auf einen Nutzkanal bezogene Anwendungen. Das Gegenteil hiervon sind auf einen Nutzkanal bezogene Anwendungen (bearer-related), zu denen insbesondere die Übertragung von Telefongesprächen zwischen zwei Teilnehmern eines öffentlichen Fernsprechnetzes über einen Nutzkanal dieses Fernsprechnetzes gehört. Nicht auf einen Nutzkanal bezogene Anwendung ist beispielsweise das Dienstmerkmal "Rückruf bei besetzt" (CCBS = Completion of Calls to Busy Subscribers). Diese nicht auf Nutzkanäle bezogenen Anwendungen werden ausschließlich im Signalisierungskanal übertragen.

Im Fall einer Netzumgebung mit mehreren im Wettbewerb stehenden Netzwerkbetreibern und dem Erfordernis einer Nummernumwertung (z.B. Rufnummernportabilität, IN-Dienste) soll eine IN-Funktion auch für nicht auf einen Nutzkanal bezogene Dienste angewendet werden, zum Beispiel auf Dienstmerkmale des ISDN (ISDN Supplementary Services). Um für diese Aufgabe einen auf einem IN (Intelligentes Netz) basierenden Server benutzen zu können, muß eine Interaktion zwischen Dienstvermittlungspunkten (Service Switching Points, SSP) des IN und Dienststeuerpunkten (Service Control Points, SCP) des IN definiert werden, die es gestattet, die Funktion des IN-Servers auf solche Dienstnachrichten anzuwenden.

In ITU-T SG11 wurde von der Firma Ericsson eine ISDN-IN-Kopplung auf der TC-Ebene (TC = Transaction Capability, Transaktions-Steuerteil, das ist ein funktionaler Block des ITU-T Signalling System No. 7 (SS No. 7)) vorgeschlagen. Die SS No. 7-Schichten werden im SSP bis einschließlich der TC-Schicht verarbeitet. Die vollständigen Inhalte der TC-Nachrichten werden von dem SSP zum SCP gesendet. Der SCP führt eine Analyse der Nachrichten durch und bestimmt, welche Funktion durchzuführen ist.

Der Erfindung liegt die Aufgabe zugrunde, den SCP insbesondere im Hinblick auf eine zu erwartende Zunahme von Telekommunikationsteilnehmern mit Nummernportabilität zu entlasten und eine dienstspezifische Funktionsaufteilung zwischen SSP und SCP zu ermöglichen.

Diese Aufgabe wird gemäß dem Verfahren nach Anspruch 1 dadurch gelöst, daß im SSP auch Schichten über der TC-Schicht (Anwendungsebene) analysiert werden.

Diese Lösung sieht somit eine ISDN-IN-Kopplung auf der Anwendungsebene (Application Level) vor. ISDN-Nachrichten und SS No. 7-Nachrichten werden durch den SSP auf der Anwendungsebene analysiert. Der SSP entscheidet durch diese Analyse, ob er den SCP für diese Nachricht einschalten muß oder nicht und welche Information zum SCP übertragen wird.

Ein Vorteil der Erfindung liegt darin, daß der SCP zumindest von denjenigen Entscheidungen, bei denen zweifelsfrei bereits der SSP feststellen kann, daß z.B. Nummernportabilität nicht vorliegt, von einer diesbezüglichen Entscheidung befreit werden kann und somit die Kapazität des SCP für andere Aufgaben zur Verfügung steht.

Weitere Vorteile der Erfindung liegen in einer starken Verminderung der Anzahl von erforderlichen Aufrufen des SCP (oder der SCPs des Netzes). Wenn ein SCP-Aufruf erforderlich ist, so müssen dann bei diesem weniger Daten übermittelt werden. Weiterhin ist von Vorteil, daß der Signalisierungsverkehr zwischen SCP und SSP verringert wird, daß er dadurch schneller ist, und daß weniger Datenverarbeitungskapazität beim SCP erforderlich ist. Schließlich ist von Vorteil, daß die SCPs weniger komplex sein müssen da die Anwendungsebene nicht vollständig oder gar nicht verstanden werden muß.

Es gibt zwei Möglichkeiten für die Abbildung (mapping) von Bearer-unrelated-Services auf IN-Dienste.
1) Für jede Art von Bearer-unrelated-Services ist eine dienstspezifische INAP-Anforderung (INAP invocation), die einen dienstspezifischen IN-Dienst ansteuert, definiert.
2) Alle Bearer-unrelated-Services werden durch einen einzigen IN-Dienst behandelt. Innerhalb der INAP-Anforderung für diesen Dienst werden Informationen über die Art des Dienstes und Dienstparameter zum SCP transportiert.

Insbesondere kann der SSP bei einer Ausführungsform der Erfindung von sich aus entscheiden, daß eine Nummernportabilität nicht erforderlich ist, wenn die Art des von einem Teilnehmer angeforderten Dienstes sich nicht in irgendeiner Weise auf einen anderen Teilnehmer bezieht. Derartige, sich nicht auf einen anderen Teilnehmer beziehende Nachrichten sind beispielsweise eine Zeitansage, oder die Umschaltung des Anschlusses des den Auftrag gebenden Teilnehmers auf eine im Telekommunikationsnetz vorgesehene Anrufbeantworterfunktion oder Mailboxfunktion.

Es wird als im Rahmen der Erfindung liegend angesehen, wenn der SSP die Anforderungen von solchen Dienstleistungen, bei denen nicht in der oben geschilderten Weise einfach entschieden werden kann, ob eine Nummernumwertung erforderlich ist oder nicht, an den SCP zur Entscheidung weitergibt. Bevorzugt ist jedoch das Telekommunikationsnetz so ausgebildet, daß bereits der dem den Dienst anfordernden Teilnehmer zugeordnete SSP eine Entscheidung trifft, ob eine Rufnummernportabilität für einen nicht auf einen Nutzkanal bezogenen Dienst bereitzustellen ist oder nicht und welche Information zum SCP gesendet wird. Der Vorteil liegt dabei darin, daß der SCP von derlei Entscheidungen vollständig befreit ist, was auch dazu führt, daß der SCP technisch einfacher auszuführen ist, oder aber daß seine technischen Einrichtungen für andere Dienste und Tätigkeiten zur Verfügung stehen.

Die Erfindung betrifft auch einen SSP, der erfindungsgemäß derart ausgebildet ist, daß er eine Einrichtung zur Analyse von Diensteanforderungen eines Teilnehmers aufweist, wobei diese Analyse dahin geht, zu entscheiden, cb eine nicht auf einen Nutzkanal bezogene angeforderte Dienstleistung eines Teilnehmers eine Nummernumwertung erfordert oder nicht. Wenn der SSP feststellt, daß z.B. eine Nummernportabilität nicht vorliegt, wird die Anforderung dieses Dienstes nicht an den zugeordneten SCP weitergereicht, sondern der SSP veranlaßt die Ausführung der Dienstleistung von sich aus.

Die Erfindung betrifft auch einen SCP, der erfindungsgemäß derart ausgebildet ist, daß er keinerlei oder eingeschränkte Einrichtungen enthält, die prüfen, ob eine angeforderte Nummernumwertung erforderlich ist, sondern der lediglich Einrichtungen enthält, um eine angeforderte Nummernumwertung bereitzustellen. Die genannte Prüfung ist nicht erforderlich, weil diese in einer tieferliegenden Ebene vom SSP ausgeführt wird.

Die Erfindung betrifft auch einen SCP, der erfindungsgemäß derart ausgebildet ist; daß er lediglich eingeschränkte Einrichtungen eines bestimmten ISDN-Dienst- oder Leistungsmerkmals bereitstellt.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen:
- Fig. 1: eine schematische Darstellung einer prinzipiellen Netzkonfiguration,
- Fig. 2: eine schematische Darstellung des Funktionsablaufs im SSP.

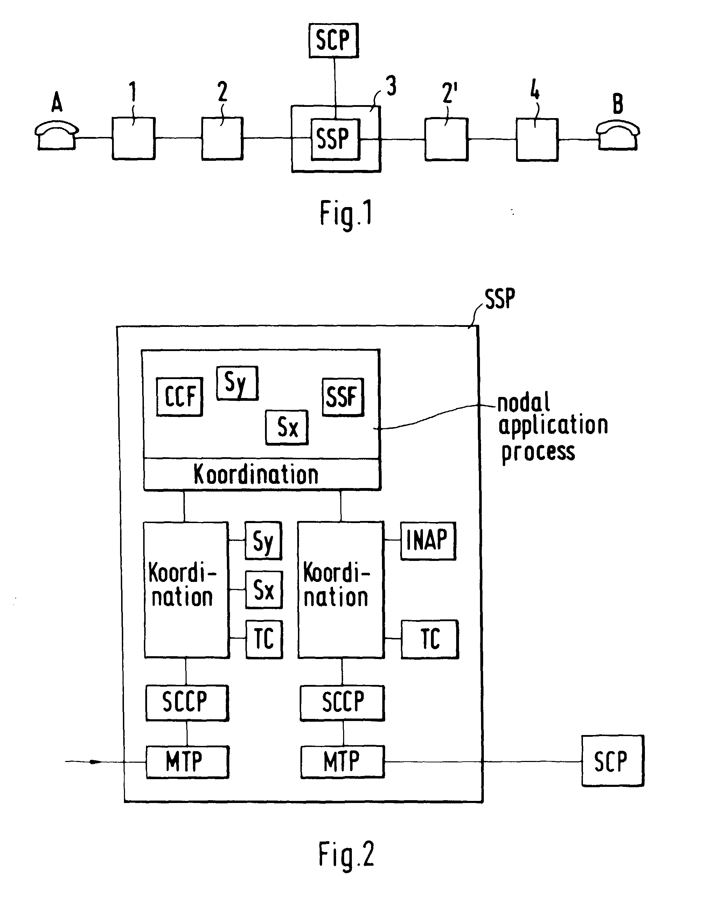

In Figur 1 ist ein rufender Teilnehmer A an seiner Vermittlungsstelle, der Ursprungs-Vermittlungsstelle 1 angeschlossen. Das Gespräch wird über eine Transit-Vermittlungsstelle 2 (oder bei anderen Konfigurationen über eine Netzübergangs-Vermittlungsstelle) zu einer Vermittlungsstelle 3 geleitet, die in diesem Beispiel die Funktion des SSP ausführt. Vom SSP gelangt die Verbindung über eine weitere Transit-Vermittlungsstelle 2' zur Ziel-Vermittlungsstelle 4 und von dort zum gerufenen Teilnehmer B.

Der SSP ist mit einem SCP verbunden, der sich im Normalfall nicht in der Nähe des SSP befinden wird.

Im Folgenden werden folgende Abkürzungen mit der nachfolgend angegebenen Bedeutung verwendet: CCF (Rufsteuerung, Call Control Funktion), Sy ist ein Teil des Nodal Application Process (Vermittlungsstellen-Anwendungsprozeß) für den Service Y, Sx ist ein Teil des Nodal Application Process für den Service X, SSF (IN-Dienststeuerfunktion, Service Switching Function), MTP (Nachrichtenübermittlungsteil, Message Transfer Part), SCCP (Signalisierungsverbindungs-Steuerteil, Signalling Connection Control Part), INAP (IN-Anwendungsprotokoll, Intelligent Networks Application Protocol), TC (Transaction Capability). MTP, SCCP und TC sind funktionale Blöcke des ITU-T Signalisierungssystems No. 7.

Figur 2 zeigt kein Schaltbild, sondern die im SSP ablaufenden Funktionen. Eine in den SSP einlaufende Nachricht gelangt in diesen in Figur 2 links unten. Diese Nachricht wird über den MTP transportiert, was allgemein üblich ist. In der MTP-Nachricht befindet sich eine SCCP-Nachricht, diese wird verarbeitet, und zwar so, daß der TC-Teil daraus gewonnen wird.

Aufgabe der Koordinationsfunktion ist es, den Inhalt der TC-Nachricht dem entsprechenden Protokollteil in der Vermittlungsstelle im SSP, der für den Service X verantwortlich ist, zu übergeben, der dieses entsprechend protokolltechnisch auswertet. Bei diesem Service X handelt es sich um eine bearer-unrelated-Anwendung, im Beispiel um CCBS. Gegebenenfalls sind auch noch andere, für die Erfindung nicht relevante, Services aktiv, was durch die Box Service Y (Sy) ausgedrückt ist. Das Ergebnis dieser Koordinationsfunktion wird, logisch (nicht schaltungstechnisch) gesehen, in die entsprechenden Anteile der funktionalen Behandlung übergeben, was allgemein als Nodal Application Process ausgedrückt wird. Der Nodal Application Process besteht im wesentlichen aus CCF, SSF, und Service-spezifischen Anteilen, ausgedrückt durch Sx, Sy, wobei auch noch andere Funktionen auftreten können. Es ist nun Aufgabe insbesondere der drei Blöcke CCF, Sx, SSF, die nötigen Analysen vorzunehmen und die richtigen Entscheidungen zu treffen. CCF aktiviert den Dienst Sx und stellt allgemeine Vermittlungsstellen-Resourcen zur Verfügung. Die SSF erhält von CCF und Sx die Aktivierungskriterien für die IN-Steuerung und veranlaßt das Senden einer INAP-Nachricht an den SCP. Hierzu wird das Ergebnis des Nodal Application Process dann der in der Figur 2 rechten Koordinationsbox übergeben. Diese veranlaßt, daß eine entsprechende INAP-Nachricht protokolltechnisch aufbereitet wird, die dann in eine TC-Nachricht hinein transferiert wird. Diese TC-Nachricht wird dem SCCP übergeben, der seinerseits seine protokolltechnischen Aufgaben durchführt. Die genannte Nachricht wird dann dem MTP übergeben. Nun ist die Nachricht bereit, dem SCP zugesandt zu werden. Diese Nachricht wird dann vom ScP ausgewertet. Die in der Zeichnung gezeigten Boxen "Koordination" führen eine zeitliche Koordinierung und Ablaufsteuerung aus.

SSP und SCP sind beschrieben z.B. in ITU-T Empfehlung 1214.

## Patentansprüche

1. Verfahren zum Bereitstellen einer ISDN/IN-Interaktion-Funktion für nicht auf einen Nutzkanal bezogene Dienste (bearer-unrelated services) in einer Kommunikationsnetzwerkumgebung, gekennzeichnet durch folgende Merkmale:
- Nachrichten von nicht auf einen Nutzkanal bezogenen Diensten werden zu einem Dienstvermittlungspunkt (Service Switching Point, SSP) durchgeleitet;
- der SSP analysiert diese empfangenen Nachrichten,
- der SSP bestimmt durch diese Analyse, ob ein Dienststeuerpunkt (Service Control Point, SCP) zum Erbringen von Funktionen für diese Nachrichten, die nicht-Nutzkanal-bezogenen Diensten zugeordnet sind, angesprochen werden muß, und welche Information zum SCP gesendet wird.

2. Verfahren nach Anspruch 1, dadurch gekennzeichnet, daß die Analyse auf der Protokoll-Anwendungs-Ebene erfolgt.

3. Verfahren nach Anspruch 1 oder 2, dadurch gekennzeichnet, daß der SCP Funktionen zur Bereitstellung der Rufnummernportabilität für Nachrichten von nicht auf einen Nutzkanal bezogenen Diensten bereitstellt.

4. Dienstvermittlungsstelle (SSP), dadurch gekennzeichnet, daß sie eine Einrichtung zur Analyse von Nachrichten von nicht auf einen Nutzkanal bezogenen Diensten aufweist, wobei diese Einrichtung derart ausgestaltet ist, daß sie solche empfangenen Nachrichten analysiert, und durch diese Analyse bestimmt, ob ein Dienststeuerpunkt (Service Control Point, SCP) zum Erbringen von Funktionen für diese Nachrichten, die nicht-Nutzkanal-bezogenen Diensten zugeordnet sind, angesprochen werden muß, und welche Information zum SCP gesendet wird.

5. Dienststeuerpunkt (SCP), dadurch gekennzeichnet, daß er auf Anforderung eines Dienstvermittlungspunkts (SSP) Rufnummernportabilitätsfunktionen für Nachrichten von nicht auf einen Nutzkanal bezogenen Diensten bereitstellt.

6. SCP nach Anspruch 5, dadurch gekennzeichnet, daß er keinerlei oder eingeschränkte Einrichtungen enthält, die prüfen, ob eine angeforderte Nummernumwertung erforderlich ist, sondern der lediglich Einrichtungen enthält, um eine angeforderte Nummernumwertung bereitzustellen.

7. SCP nach Anspruch 5 oder 6, dadurch gekennzeichnet, daß er lediglich eingeschränkte Einrichtungen eines bestimmten ISDN-Dienst- oder Leistungamerkmals bereitstellt.
